# EUROPÄISCHE PATENTSCHRIFT

(11) **EP 2 306 074 B1**
(45) Veröffentlichungstag und Bekanntmachung des Hinweises auf die Patenterteilung: **17.05.2017**
(21) Anmeldenummer: 10010126.0
(22) Anmeldetag: 22.09.2010
(51) Int. Cl.: F21S 8/12, F21V 5/00, B60Q 1/14, G02B 27/42, F21S 8/10

(54) **Kraftfahrzeugscheinwerfer mit einem Halbleiterlichtquellen, eine Primäroptik und eine sekundäroptik aufweisenden Lichtmodul**
Motor vehicle headlight with a lighting module comprising semiconductor light sources, a primary optic and a secondary optic
Phare de véhicule automobile doté d'un module d'éclairage comprenant des sources de lumière à semi-conducteurs, une optique primaire et une optique secondaire

(30) Priorität: 05.10.2009 DE 102009049558; 17.11.2009 DE 202009017939 U; 20.05.2010 DE 102010029176
(43) Veröffentlichungstag der Anmeldung: 06.04.2011
(73) Patentinhaber: Automotive Lighting Reutlingen GmbH, 72762 Reutlingen (DE)
(72) Erfinder: Stefanov, Emil P., Dr.-Ing., 72762 Reutlingen (DE)
(74) Vertreter: DREISS Patentanwälte PartG mbB

(56) Entgegenhaltungen:
- EP-A1- 0 171 646
- DE-A1- 4 031 352
- DE-A1-102008 013 603
- JP-A- 2008 226 542
- US-A1- 2007 120 137

## Beschreibung

Die vorliegende Erfindung betrifft einen Kraftfahrzeugscheinwerfer mit einem Lichtmodul, das eine matrixartige Anordnung von Halbleiterlichtquellen, eine Primäroptik und eine Sekundäroptik aufweist, wobei die Primäroptik Halbleiterlichtquellen-individuelle Lichtleiterabschnitte und eine aus matrixartig angeordneten Teilgrenzflächen zusammengesetzte Grenzfläche aufweist, wobei ein jeweils erster Lichtleiterabschnitt und eine jeweils erste Teilgrenzfläche dazu eingerichtet sind, von einer jeweils ersten Halbleiterlichtquelle aufgenommenes Licht in einer Hauptabstrahlrichtung auf die Sekundäroptik zu richten, und wobei die Sekundäroptik dazu eingerichtet ist, eine sich auf der Grenzfläche einstellende Lichtverteilung in ein vor dem Scheinwerfer liegendes Vorfeld abzubilden.

Ein solcher Kraftfahrzeugscheinwerfer ist aus der
DE 10 2008 013 603 A1 bekannt.

Herkömmliche Kraftfahrzeugscheinwerfer weisen zur Erzeugung einer bestimmten Lichtverteilung wie einer Abblendlichtverteilung, einer Fernlichtverteilung, einer Nebellichtverteilung, einer Stadtlichtverteilung, einer Autobahnlichtverteilung, einer Landstraßenlichtverteilung, etc., jeweils eine einzige Lichtquelle, z. B. in Form einer Halogen- oder einer Gasentladungslampe, auf. Durch die Entwicklung von Hochleistungs-Halbleiterlichtquellen wie Leuchtdioden (LEDs), die auch weißes Licht aussenden, können die gleichen Lichtfunktionen auch mit Hilfe solcher Halbleiterlichtquellen realisiert werden. Um die nötige Lichtstärke zur Erzeugung einer gewünschten Lichtverteilung bereitstellen zu können, werden in der Regel mehrere Halbleiterlichtquellen simultan betrieben. Die simultan betriebenen Halbleiterlichtquellen werden in einem LED-Scheinwerfer oder LED-Lichtmodul im Allgemeinen nach Art einer Matrix in Zeilen und/oder Spalten angeordnet.

Die durch die matrixartige Anordnung erzeugte Lichtverteilung setzt sich aus mehreren in versetzten Richtungen nebeneinander und untereinander angeordneten Abbildungen der Teilgrenzflächen zusammen. Die Abbildung wird dabei durch die Sekundäroptik erzeugt, die ein Bild der von der Primäroptik auf der Lichteinfallsseite der Sekundäroptik erzeugten Lichtverteilung in das Vorfeld des Lichtmoduls auf der Fahrbahn projiziert.

Dabei tritt das Problem auf, dass Abstände zwischen den Lichtaustrittsflächen der Halbleiterlichtquellen zu dunkleren Linien, insbesondere zu einer Gitterstruktur zwischen den Abbildungen der einzelnen LEDs in der resultierenden Lichtverteilung führen können. Analog kann es durch sich überschneidende Abbildungen leuchtender Flächen der Halbleiterlichtquellen zu Gitterlinien-artig verteilten Intensitätsmaxima in der auf die Fahrbahn projizierten Lichtverteilung kommen. Insgesamt kann die erzielte Lichtverteilung Inhomogenitäten, insbesondere eine störende Gitterstruktur aus hellen oder dunklen Linien aufweisen. Durch die aus der DE 10 2008 013 603 A1 bereits bekannten Primäroptiken gelingt es, diese störende Gitterstruktur bereits weitgehend zu unterdrücken.

Letztlich setzt sich die im Vorfeld des Scheinwerfers erzeugte Lichtverteilung aus den Abbildungen der als Lichtaustrittsflächen dienenden Teilgrenzflächen der Primäroptiken zusammen, wobei für die Erzeugung einer konventionellen Fernlichtverteilung ein zusammenhängendes Muster der Halbleiterlichtquellen oder auch alle Halbleiterlichtquellen eingeschaltet werden. Die Halbleiterlichtquellen sind einzeln ansteuerbar, so dass einzelne Abbildungen bzw. die entsprechenden Teile des Ausleuchtvolumens, gezielt aus der Lichtverteilung herausgenommen werden können.

Es werden insbesondere diejenigen Abbildungen bzw. diejenigen Teile des Ausleuchtvolumens herausgenommen, in denen sich entgegenkommende Verkehrsteilnehmer befinden. Die Position der entgegenkommenden Verkehrsteilnehmer wird mittels geeigneter Sensoren, z.B. durch Infrarotsensoren und/oder Radarsensoren in Verbindung mit einer Bildverarbeitung ermittelt. Auf diese Weise kann ein blendfreies Fernlicht realisiert werden. Diese Art der Lichtverteilung wird auch als Teilfernlicht bezeichnet.

Beim Ausschalten einzelner Halbleiterlichtquellen entstehen gewollt dunklere Bereiche in der resultierenden Lichtverteilung, die von den helleren Bereichen durch Helldunkelgrenzen getrennt sind. Bei solchen, durch eine Sekundäroptik als Projektion erzeugten Helldunkelgrenzen besteht bekanntlich das Problem, das die Wellenlängenabhängigkeit der Brechzahl einer als Sekundäroptik dienenden Linse zu störenden Farbsäumen an der Helldunkelgrenze führt.

Solche Farbsäume lassen sich bei Helldunkelgrenzen, die sich im Wesentlichen längs einer einzigen Raumrichtung erstrecken, durch eine streuend wirkende Strukturierung der Oberfläche der Linse abschwächen. Bei einer Abschaltung einzelner Halbleiterlichtquellen oder Gruppen von Halbleiterlichtquellen werden deren zugehörige Teilgrenzflächen der Primäroptik nicht mehr beleuchtet. Die Sekundäroptik bildet diese nicht mehr beleuchteten Teilgrenzflächen als dunkle Bereiche ab, die zum Beispiel durch horizontal und vertikal verlaufende Helldunkelgrenzen von hellen Bereichen der Lichtverteilung abgegrenzt werden. Diese Helldunkelgrenzen bilden unter Umständen einen großen Winkel, der im Bereich von 90 ° liegen kann. Bei in zwei, einen großen Winkel im Bereich von 90 ° einschließenden Helldunkelgrenzen, wie sie beim Ausschalten einzelner Halbleiterlichtquellen in einer Matrix-artigen Anordnung von Halbleiterlichtquellen auftreten, funktioniert die Abschwächung der Farbsäume durch eine streuende Strukturierung der Linsenoberfläche jedoch nicht mehr in ausreichendem Maße. Die Farbsäume lassen sich entweder nur unterschiedlich stark für beide Raumrichtungen unterdrücken, oder die unterdrückende Wirkung ist insgesamt zu schwach.

Problematisch ist auch, dass die Primäroptiken neben erwünschten Hauptabstrahlrichtungen, mit denen die Sekundäroptik beleuchtet wird, auch unerwünschtes, in Nebenabstrahlrichtungen weisendes Streulicht erzeugen. Dieses kann durch ungezielt erfolgende Reflexionen an Teilen des Scheinwerfers oder des Fahrzeugs auf die Lichteintrittsfläche der Sekundäroptik zurück gelangen und auf diese Weise einen unerwünschten Einfluss auf die sich im Vorfeld, also zum Beispiel auf einer Fahrbahn vor dem Scheinwerfer einstellende Lichtverteilung entfalten. Ein solcher unerwünschter Einfluss kann sich auch aus Licht ergeben, das an der Sekundäroptik vorbei durch ungezielte Reflexionen in die von der Sekundäroptik erzeugte Lichtverteilung gelangt.

Die genannten Probleme sind nicht voneinander unabhängig. So ist es für eine möglichst homogene Beleuchtung der Lichteintrittsseite der Sekundäroptik, also der Seite, die den Lichtaustrittsflächen der Primäroptik zugewandt ist, hilfreich, wenn Anteile an dem aus der Primäroptik austretenden Licht, die Inhomogenitäten der resultierenden Lichtverteilung verursachen können, durch eine in Nebenabstrahlrichtungen erfolgende Abstrahlung an der Lichteintrittsfläche der Sekundäroptik vorbei gerichtet werden.

Damit wird aber gleichzeitig der potenziell störende Streulichtanteil erhöht, der nach ungezielter Reflexion im Inneren des Lichtmoduls oder Scheinwerfers in unerwünschter Weise zu einem nachteiligen Einfluss auf die gewünschte Lichtverteilung führen kann.

Die Farbsäume wiederum ergeben sich als Folge der erwünschten Mosaik-artigen Zusammensetzung der gewünschten Lichtverteilung, zum Beispiel einer Teilfernlichtverteilung. Sie ergeben sich insbesondere daraus, dass die Ränder eines zur Vermeidung einer Blendwirkung abgedunkelten Teilbereichs einer Fernlichtverteilung sowohl vertikal als auch horizontal verlaufende Helldunkelgrenzen aufweisen und die übliche Farbkorrektur mittels streuender Strukturen in der Lichtaustrittsfläche der Sekundäroptik die Farbfehler, die als Folge von in verschiedenen Richtungen verlaufenden Helldunkelgrenzen auftreten, nicht ausreichend kompensieren.

Vor diesem Hintergrund besteht die Aufgabe der Erfindung darin, einen Scheinwerfer der eingangs genannten Art dahingehend zu verbessern, dass die Probleme unerwünschter Farbsäume bei einer Mosaik-artig beeinflussbaren Lichtverteilung und die Probleme unerwünschter Streulichteinflüsse sowie das Problem der Vermeidung gitterartig verlaufender Inhomogenitäten in Form von Intensitätsunterschieden innerhalb einer Lichtverteilung zumindest reduziert werden.

Diese Aufgabe wird bei einem Scheinwerfer der eingangs genannten Art dadurch gelöst, dass der jeweils erste Lichtleiterabschnitt und/oder die jeweils erste Teilgrenzfläche dazu eingerichtet ist, Licht einer jeweils zweiten Halbleiterlichtquelle, das direkt oder über einen jeweils zweiten Lichtleiterabschnitt auf die jeweils erste Teilgrenzfläche fällt, in einer Nebenabstrahlrichtung an der Sekundäroptik vorbei zu richten, wobei der Kraftfahrzeugscheinwerfer wenigstens eine reflektierende und/oder absorbierende Fläche aufweist, die so angeordnet ist, dass das in die Nebenabstrahlrichtungen gerichtete Licht daran gehindert wird, die sich im Vorfeld einstellende Lichtverteilung zu beeinflussen, und wobei die Sekundäroptik eine achromatisch wirkende Anordnung aus zwei Linsen mit unterschiedlicher Brechzahl aufweist.

Diese Merkmale erlauben die Erzeugung einer beliebigen, aus Abbildungen der einzelnen Halbleiterlichtquellen Mosaik-artig zusammengesetzten Lichtverteilung, insbesondere einer Helldunkelgrenzen aufweisenden Teilfernlichtverteilung und/oder Abblendlichtverteilung unter Verwendung einer als Leuchtflächenmosaik strukturierten, aus mehreren Halbleiterlichtquellen zusammengesetzten Lichtquelle in Verbindung mit der Primäroptik und der abbildenden Sekundäroptik.

Im Gegensatz zu direkt abbildenden Systemen, unter denen hier Systeme ohne Primäroptik zwischen dem Halbleiterlichtquellen-Mosaik und der abbildenden Sekundäroptik verstanden werden, erlaubt die Erfindung eine Eliminierung einer in der Leuchtfläche des Halbleiterlichtquellen-Mosaiks physisch existierenden Helldunkelgitterstruktur in der Abbildung des Mosaiks auf der Fahrbahn.

Dieser Vorteil wird im Wesentlichen durch die Primäroptik erzielt, die unerwünschte Lichtbeiträge, die zum Beispiel aus den naturgemäß großen Abstrahlwinkeln der Halbleiterlichtquellen resultieren, in Nebenabstrahlrichtungen an der Sekundäroptik vorbei richtet. Zu Beleuchtungszwecken bekannte Halbleiterlichtquellen sind sogenannte Lambertstrahler, deren breite Abstrahlcharakteristik einen Halbraum erfasst.

Aus diesen Nebenabstrahlrichtungen ergeben sich in Verbindung mit ungezielt erfolgenden Reflexionen dann, wenn keine Gegenmaßnahmen getroffen werden, unerwünschte Einflüsse auf die letztlich auf der Fahrbahn erzeugte Lichtverteilung.

Durch eine Blenden- bzw. Shutter-Struktur in Form der wenigstens einen reflektierenden oder absorbierenden Fläche erlaubt die Erfindung ein Ausblenden dieser unerwünschten Einflüsse bei der Erzeugung der gewünschten Lichtverteilung. Die achromatisch wirkende Anordnung aus zwei Linsen mit unterschiedlicher Brechzahl erlaubt eine für die Verwendung zur Erzeugung von Lichtverteilungen von Kraftfahrzeugscheinwerfern ausreichende Farbfehlerkorrektur.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Figur 1: eine Schnittdarstellung eines Kraftfahrzeugscheinwerfers;
- Figur 2: eine Ausgestaltung einer Primäroptik;
- Figur 3: Hauptabstrahlrichtungen und Nebenabstrahlrichtungen von in dem Lichtmodul propagierendem Licht;
- Figur 4: Ausgestaltungen von Lichtmodulen, die sich in der Ausgestaltung der Blenden- bzw. Shutterflächen unterscheiden;
- Figur 5: eine Ausgestaltung eines Lichtmoduls, das einen Tubus aufweist;
- Figur 6: eine Primäroptik in einer perspektivischen Ansicht;
- Figur 7: Lichtleiterabschnitte mit einzelnen Strahlenverläufen;
- Figur 8: eine Anordnung einer Halbleiterlichtquelle relativ zu einem Lichtleiterabschnitt bei einer berührungslos erfolgenden Einkopplung;
- Figur 9: eine vergleichbare Anordnung bei einer nicht berührungslos erfolgenden Einkopplung; und
- Figur 10: eine nicht berührungslos erfolgende Einkopplung mit einer vorteilhaften Ausgestaltung des Lichtleiterabschnitts.

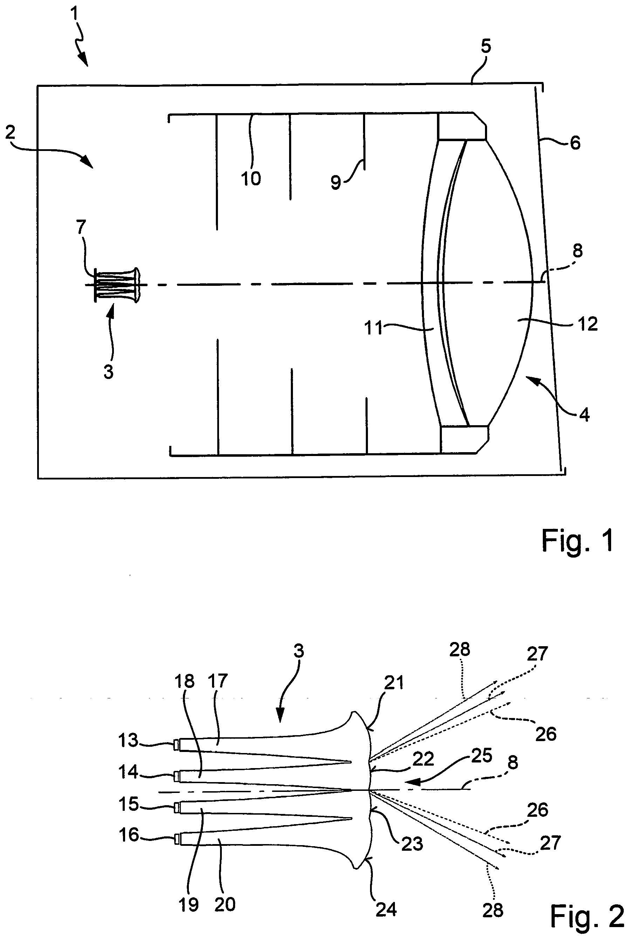

Im Einzelnen zeigt die Fig. 1 eine Schnittdarstellung eines Kraftfahrzeugscheinwerfers 1 mit einem Lichtmodul 2, das eine matrixartige Anordnung von Halbleiterlichtquellen, eine Primäroptik 3 und eine Sekundäroptik 4 aufweist. Das Lichtmodul 2 ist in einem Gehäuse 5 des Kraftfahrzeugscheinwerfers 1 angeordnet. Das Gehäuse 5 weist eine Lichtaustrittsöffnung auf, die von einer transparenten Abdeckscheibe 6 abgedeckt wird. Die matrixartige Anordnung von Halbleiterlichtquellen ist in der dargestellten Ausgestaltung auf einer Platine 7 angeordnet.

Die Halbleiterlichtquellen sind einzeln oder in Gruppen einschaltbar und ausschaltbar, so dass ihr jeweiliger Einfluss auf die Lichtverteilung vor dem Fahrzeug getrennt gezielt aktivierbar und deaktivierbar ist.

Die Platine ist in einer bevorzugten Ausgestaltung eine starre Leiterplatte oder eine flexible Leiterplatte. Eine flexible Leiterplatte hat den Vorteil, dass sie eine im Raum gekrümmte, insbesondere konkav gekrümmte Anschlussfläche für die Halbleiterlichtquellen erlaubt, durch die sich bereits eine gewisse bündelnde Wirkung ergibt. Starre Leiterplatten besitzen dagegen den Vorteil geringerer Kosten und einer besseren Handhabbarkeit bei der Herstellung des Scheinwerfers und einer größeren Stabilität.

Bevorzugt ist auch, dass die Platine als bauliche Einheit mit Kühlelementen für die Halbleiterlichtquellen ausgestaltet ist, um die im Betrieb anfallende elektrische Verlustwärme zuverlässig abführen zu können.

Eine optische Achse 8 erstreckt sich im Wesentlichen horizontal von der Anordnung der Halbleiterlichtquellen ausgehend durch die Primäroptik 3 und die Sekundäroptik 4 hindurch. Fig. 1 zeigt insofern einen längs der optischen Achse 8 geschnittenen Schweinwerfer 1 von der Seite, d.h. aus einer quer zur optischen Achse 8 liegenden Blickrichtung.

Das Lichtmodul 2 weist wenigstens eine reflektierende und/oder absorbierende Fläche 9 auf. Die Fläche 9 stellt in der dargestellten Ausgestaltung ein Shutterelement dar, das in einem Tubus 10 seitlich an einer Wand angeordnet ist und das sich quer zur optischen Achse 8 in das Innere des Lichtmoduls 2 erstreckt. Bei der Sekundäroptik 4 handelt es sich um eine achromatisch wirkende Anordnung aus zwei Linsen 11, 12 mit unterschiedlicher Brechzahl, die durch das jeweilige Material und die Form der beiden Linsen 11, 12 eine Farbfehler korrigierende Doppellinse darstellt.

Fig. 2 zeigt eine Ausgestaltung einer Primäroptik 3 zusammen mit einer Anordnung von Halbleiterlichtquellen 13, 14, 15, 16. Die Halbleiterlichtquellen sind in der Fig. 2 lediglich aus Gründen der Übersichtlichkeit ohne die Platine 7 aus der Fig. 1 dargestellt. Als Halbleiterlichtquellen 13, 14, 15, 16 werden in einer Ausgestaltung Leuchtdioden (LEDs) verwendet. Die Halbleiterlichtquellen besitzen je nach Ausgestaltung eine rechteckige oder eine aufgrund der gewünschten Lichtverteilung von der Rechteckform abweichende Lichtaustrittsfläche und emittieren Licht in der für Scheinwerfer-Lichtverteilungen gewünschten, näherungsweise weißen Farbe. In einer alternativen Ausgestaltung werden RGB-LEDs verwendet, also Kombinationen aus roten, blauen und grünen LEDs, die in der Summe ein farblos weißes Licht ergeben.

Die Primäroptik 3 weist Halbleiterlichtquellen-individuelle Lichtleiterabschnitte 17, 18, 19, 20 und eine aus matrixartig angeordneten Teilgrenzflächen 21, 22, 23, 24 zusammengesetzte Grenzfläche 25 auf.

Die Lichtleiterabschnitte sind bevorzugt aus Silikon hergestellt. Silikon ist ein hochtransparentes Material und weist eine hohe Temperaturbeständigkeit bis ca. 260°C auf. Erhitztes Silikon ist besonders dünnflüssig und kann so während des Spritzgießverfahrens auch in relativ filigrane Strukturen gespritzt werden. In anderen Ausgestaltungen bestehen sie aus Glas, Kunststoff oder einem technisch vergleichbaren Material. Ein jeweils erster Lichtleiterabschnitt 18 und eine jeweils erste Teilgrenzfläche 22 sind dazu eingerichtet, von einer jeweils ersten Halbleiterlichtquelle 14 aufgenommenes Licht in einer Hauptabstrahlrichtung 26 auf die Sekundäroptik zu richten. Die Strahlen 27 und 28 repräsentieren Nebenabstrahlrichtungen. Das in diese Richtungen 27, 28 abgestrahlte Licht soll die von der Sekundäroptik aus dem Licht der Hauptabstrahlrichtungen erzeugte Lichtverteilung nicht beeinflussen.

Jeder längliche Lichtleiterabschnitt 17, 18, 19, 20 ist mit seinem seiner Teilgrenzfläche 21, 22, 23, 24 gegenüberliegenden Ende unmittelbar vor der ihm zugeordneten Halbleiterlichtquelle 13, 14, 15, 16 oder Gruppe von Halbleiterlichtquellen angeordnet, um von diesen ausgehendes Licht aufzunehmen. Das aufzunehmende Licht wird zunächst durch Brechung in das Innere des Lichtleiterabschnittes eingekoppelt und dann vorwiegend durch Totalreflexionen, die an seitlichen, d.h. mit ihrer Flächennormalen quer zur optischen Achse 8 ausgerichteten, Transportflächen erfolgen, in Richtung seiner Teilgrenzfläche weitergeleitet. Durch seine besondere Form, die sich durch einen sich in Lichtausbreitungsrichtung aufweitenden Querschnitt auszeichnet, und durch Mehrfachreflexion an den Transportwänden reduziert der Lichtleiter den Öffnungswinkel des ihn durchdringenden Lichtbündels.

Der sich aufweitende Querschnitt wird bevorzugt durch in Lichtausbreitungsrichtung verlaufende Seitenflächen erzielt, die zumindest abschnittsweise konisch verlaufen und/oder konvex und/oder konkav gekrümmt sind und dabei eine trichterförmige Struktur definieren.

In der dargestellten Ausgestaltung nähern sich die Transportflächen benachbarter Lichtleiterabschnitte mit zunehmender Annäherung an die Teilgrenzflächen aneinander an. Je nach Ausgestaltung besteht die Primäroptik 3 aus einzelnen, getrennten Lichtleiterabschnitten oder ist als einstückige Anordnung von Lichtleiterabschnitten realisiert.

In jedem Fall ist bevorzugt, dass die Lichtleiterabschnitte an ihrem Teilgrenzflächen-seitigen Ende optisch miteinander gekoppelt sind. Dabei wird unter einer optischen Kopplung verstanden, dass das in eine Nebenabstrahlrichtung eines Lichtleiterabschnitts propagierende Licht so abgelenkt wird, dass es die Primäroptik letztlich über die Teilgrenzfläche eines benachbarten Lichtleiterabschnitts verlässt.

Die Teilgrenzflächen 21, 22, 23, 24 sind dazu eingerichtet, die Öffnungswinkel der austretenden Lichtbündel, die in die nachfolgende, abbildende Sekundäroptik 4 gelangen, noch weiter zu verkleinern. Durch die Mehrfachreflexion in den Lichtleiterabschnitten und durch die weitere Bündelung an den Teilgrenzflächen wird eine homogene Leuchtdichteverteilung auf der Grenzfläche 25 zusammengefügt, die keine, oder höchstens stark unterdrückte, Gitterstrukturen aufweist und die die räumliche Trennung zwischen den Halbleiterlichtquellen nicht abbildet.

Gleichzeitig lenken jeweils benachbarte Teilgrenzflächen Inhomogenitäten verursachende Lichtanteile von der abbildenden Sekundäroptik weg, so dass diese nicht zur Abbildung beitragen können und keine störenden Hell-Dunkel-Strukturen in der auf der Fahrbahn erzeugten Lichtverteilung generieren.

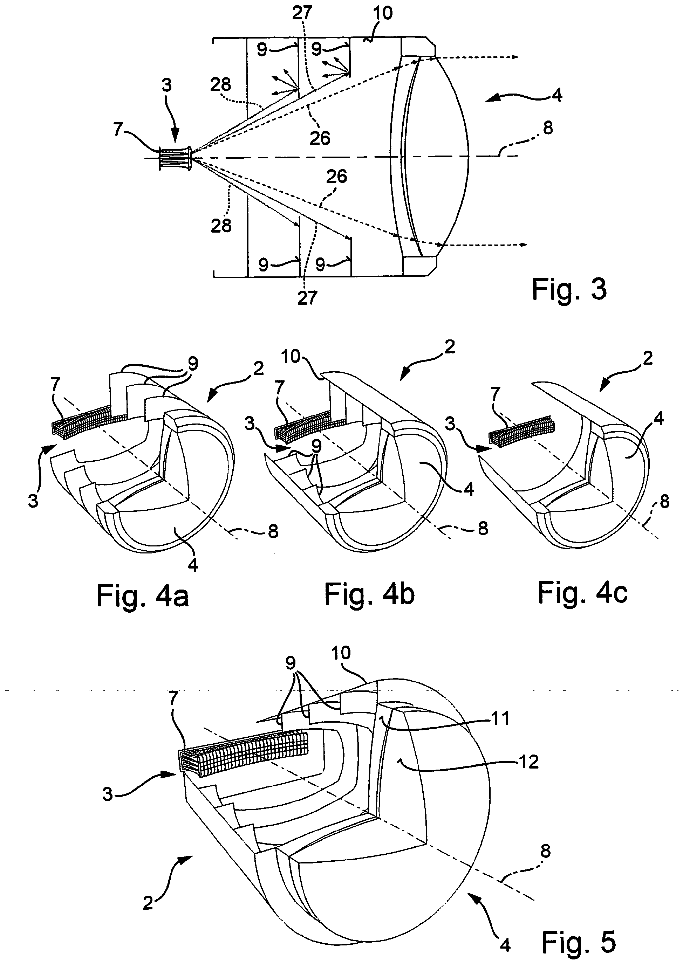

Fig. 3 zeigt, wie das von Hauptabstrahlrichtungen 26 begrenzte Lichtbündel, das aus dem unmittelbar über der optischen Achse 8 liegenden Lichtleiterabschnitt ausgekoppelt wird, in die abbildende Sekundäroptik 4 gelangt. Darüber hinaus zeigt die Fig. 3, wie das in Nebenabstrahlrichtungen 27, 28 aus diesem Lichtleiterabschnitt ausgekoppelte Licht von den Blenden- bzw. Shutterflächen 9 entweder wegreflektiert oder absorbiert wird. Die Fig. 3 zeigt damit insbesondere, wie eine geeignete Anordnung von Blenden- bzw. Shutterflächen 9 die störenden Lichtanteile daran hindert, auf die Fahrbahn vor dem Autofahrer zu gelangen und dort eine gewünschte Lichtverteilung zu stören.

Fig. 4 zeigt verschiedene Ausgestaltungen von Lichtmodulen 2, die sich in der Ausgestaltung der Blenden- bzw. Shutterflächen 9 unterscheiden. In der Fig. 4a ist die Shutter-Vorrichtung nur aus Blendenflächen 9 realisiert. Die Ausgestaltung, die in der Fig. 4b dargestellt ist, weist zusätzlich zu den Blendenflächen 9 noch einen Tubus 10 auf. Sofern ein solcher Tubus 10 vorhanden ist, können die Blendenflächen 10 auch weggelassen werden, wenn das Innere des Tubus 10 ausreichend gut absorbiert. Das mit den Blenden- bzw. Shutterflächen 9 und/oder dem Tubus 10 angestrebte Ziel besteht in jedem Fall darin, das durch die Primäroptik in Nebenabstrahlrichtungen 27, 28 umgelenkte Licht nicht in die abbildende Sekundäroptik 4 oder auf anderem Weg auf die Straße vor dem Fahrzeug gelangen zu lassen.

Die Anzahl und Position der Blenden- bzw. Shutterflächen 9 und/oder des Tubus 10 ist nach lichttechnischen Gesichtspunkten festzulegen. Falls ein Tubus 10 verwendet wird, sieht eine vorteilhafte Ausgestaltung vor, den Tubus auch als Halterung der abbildenden Sekundäroptik 4 zu verwenden und damit für mehrere Funktionen zu nutzen. Dadurch kann die Zahl der benötigten Teile verringert werden, was Kosten-, Gewichts- und Bevorratungsvorteile mit sich bringt.

Der Querschnitt und die Länge eines solchen Tubus 10 können von Ausgestaltung zu Ausgestaltung variieren. Ein Dimensionierungskriterium ist in jedem Fall, dass die Blenden- bzw. Shutterflächen 9 und/oder der Tubus 10 die Sichtbarkeit der Primäroptik 3 in Bezug auf eine beliebige Position auf der Lichteintrittsfläche der abbildenden Sekundäroptik 4 nicht einschränken soll. Das ist damit gleichbedeutend, dass die Blenden- bzw. Shutterflächen 9 und/oder der Tubus 10 das von Hauptabstrahlrichtungen 26 gebildete und die gesamte Lichteintrittsfläche der Sekundäroptik beleuchtende Lichtbündel nicht beschränken.

Die Fig. 5 zeigt eine Ausgestaltung eines Lichtmoduls 2, bei der ein Tubus 10 einen veränderlichen Querschnitt aufweist, der in Lichtausbreitungsrichtung längs der optischen Achse 8 zunimmt.

In jeder Ausgestaltung ist die Sekundäroptik 4 dazu eingerichtet, eine Lichtverteilung, die sich auf der als Lichtaustrittsfläche der Primäroptik 3 dienenden Grenzfläche 25 der Primäroptik 3 einstellt, in ein vor dem Scheinwerfer 1 liegendes Vorfeld abzubilden.

Die Sekundäroptik 4 ist insbesondere dazu eingerichtet, die genannte Lichtverteilung, die sich auf der Grenzfläche 25 einstellt, ausreichend scharf und farbtreu auf die Fahrbahn zu projizieren. Da diese Lichtverteilung je nachdem, welche Halbleiterlichtquellen der matrixartigen oder mosaikartigen Anordnung der Halbleiterlichtquellen eingeschaltet sind, sowohl horizontale als auch vertikale Kanten in Form von Helldunkelgrenzen aufweist, muss die Farbkorrektur sowohl horizontal als auch vertikal besonders gut gelingen.

Die Farbdispersion ist das Resultat von Brechzahlwerten, die sich mit der Wellenlänge ändern. Kurzwelligere Lichtanteile werden stärker gebrochen als langwelligere Lichtanteile. Mit anderen Worten: Blaue Lichtanteile werden stärker gebrochen als grüne Lichtanteile und diese werden stärker als rote Lichtanteile gebrochen. Mit einer unbehandelten Einzellinse kann die materialbedingte Farbdispersion optischer Materialien nicht kompensiert werden.

Aufgrund der Wellenlängenabhängigkeit der Brechzahlwerte variiert die Brennweite einer Einzellinse mit der Wellenlänge. Dieser Effekt führt dazu, dass insbesondere an den Rändern abzubildender scharfkantiger Strukturen Farbsäume sichtbar werden.

Um die Farbsäume zu kompensieren, ist es aus der Astronomie, der Fotografie und der Mikroskopie bekannt, Mehrfachlinsen unterschiedlicher Brechkraft und Abbe-Zahlen oder Einfachlinsen mit speziellen Dispersionsstrukturen einzusetzen. Diese Ansätze basieren auf sorgfältig ausgewählten optischen Glassorten oder auf speziell hergestellten Strukturen. Sie sind oft mit entsprechend hohen Kosten verbunden, was für eine Verwendung als Serienprodukte im Kraftfahrzeugbau aus wirtschaftlichen Gründen hinderlich ist.

Die genannten Mehrfachlinsen sind als Achromate bekannt. Unter einem Achromat versteht man in der Optik ein System aus zwei Linsen, die aus verschiedenen optischen Materialien mit unterschiedlich starker Dispersion (unterschiedlicher Abbe-Zahl) bestehen. Die Linsen können aus Materialpaarungen hergestellt sein, die Glas, Kunststoff oder Silikon aufweisen. Das System weist eine Sammellinse 12 (bevorzugt aus Kronglas) und eine Zerstreuungslinse 11 (bevorzugt aus Flintglas) mit kleinerer Abbe-Zahl und somit stärkerer Dispersion als die Sammellinse 12 auf.

Die Abbe-Zahl ist eine in der Optik gebrauchte dimensionslose Größe für die Dispersion eines transparenten Mediums. Optisches Flintglas wird als ein Glas mit einer Abbeschen Zahl kleiner als 50 definiert. Die Brechzahl optischer Flintgläser liegt im Bereich von 1,5 bis 2,0. Optisches Kronglas weist dagegen eine vergleichsweise geringere Dispersion (Abbe-Wert > 50) auf.

Durch unterschiedliche Dispersionswerte der Linsenmaterialien lässt sich eine zerstreuende Linse 11 aus Flintglas mit einer Sammellinse 12 aus Kronglas zu einem Achromat kombinieren, also zu einer farbkorrigierten Sammellinse. Die Kronglaslinse 12 wird stärker sammelnd geformt als die Flintglaslinse 11 zerstreuend geformt wird, so dass in der Summe eine Sammelwirkung erreicht wird. Eine sammelnde Kronglaslinse eines Achromaten wird auch als positive Linse bezeichnet, während eine zerstreuend wirkende Flintglaslinse auch als negative Linse bezeichnet wird. Im Idealfall heben sich die konträren Dispersionswirkungen der beiden Linsen gerade auf, so dass unterschiedliche Farben mit gleicher Brechzahl gebrochen werden.

Dadurch kann eine unterschiedliche Brennweite von zwei vordefinierten, verschiedenen Spektralfarben (sog. Farblängsfehler), also für zwei Wellenlängen, korrigiert werden. Das bedeutet, dass das System den Farblängsfehler für zwei Spektralfarben kompensiert. Die Kompensation erfolgt dadurch, dass das System für die beiden Spektralfarben gleiche Brennpunkte besitzt.

Die Materialien der beiden Linsen 11 und 12 werden vorzugsweise so gewählt, dass Wellenlängen im Rotspektrum und im Blauspektrum kompensiert werden können. Alternativ können auch Wellenlängen aus dem Blauspektrum und dem Gelbspektrum kompensiert werden. Die Materialauswahl für die Linsen 11, 12 kann in der Praxis auch so vorgenommen werden, dass keine vollständige Achromatisierung erfolgt, jedoch eine deutliche Reduzierung der Farbdispersion und eine deutlich verringerte Farbseparation in der Abbildung erreicht wird.

Eine Doppellinse aus zwei Linsen aus unterschiedlichen Kunststoffarten wie Polycarbonat (PC) und Polymethylmethacrylat (PMMA) ergibt zwar keinen perfekten Achromat, erlaubt aber eine deutliche Reduzierung der Farbdispersion und führt damit zu einer deutlichen Verringerung der unerwünschten Farbseparation in der Abbildung der Helldunkelgrenzen in der auf die Fahrbahn projizierten Lichtverteilung.

Um eine für Kraftfahrzeugscheinwerfer wirtschaftlich vertretbare Farbfehlerkorrektur zu erzielen, ist es wünschenswert, eine achromatisch wirkende Linsenanordnung mit einer Kombination aus einer Glaslinse und einer Kunststofflinse oder sogar einer Kunststofflinse mit einer Kunststofflinse zu finden und zu realisieren. Im Kraftfahrzeugbau bereits verbreitet eingesetzte optische Kunststoffmaterialien sind PC (Polycarbonat) und PMMA (Polymethylmethacrylat) oder auch der Glastyp B270, bei dem es sich um ein farbloses, hochtransparentes Kronglas handelt. Zum Einsatz kommen zunehmend auch hochtransparente Silicone. PC hat eine Abbe-Zahl von ca. 28..30 und kann als Flintglas eingesetzt werden. Dagegen haben PMMA, B270 und Silikon annähernd gleiche Abbe-Zahlen von ca. 62.

Die möglichen Kombinationen sind zwar bei weitem davon entfernt, typische Achromat-Lösungen für diesbezüglich anspruchsvolle optische Aufgaben wie in der Astronomie, der Mikroskopie, oder der Fotografie zu ergeben, haben aber das Potential, die Dispersionseffekte auf ein für Kraftfahrzeuganwendungen erträgliches Maß herabzusetzen. Eine vorteilhafte Ausgestaltung sieht vor, dass eine achromatisch wirkende Linsenanordnung, die eine solche Kombination aufweist, zusätzlich streuende regelmäßige oder unregelmäßige Oberflächenstrukturen auf der Lichtaustrittsfläche der Linsenanordnung besitzt. Durch solche streuenden Oberflächenstrukturen können ebenfalls Farbeffekte reduziert werden, so dass sich in der Summe bei einer achromatisch wirkenden Linsenanordnung aus einer Kombination der genannten Materialien in Verbindung mit zusätzlichen streuenden Oberflächenstrukturen eine für Kraftfahrzeugscheinwerfer ausreichende Verringerung von Farbfehlern der abbildenden Sekundäroptik ergibt, die sich mit vergleichsweise geringen Kosten erzielen lässt. Ferner kann durch die Oberflächenstrukturen der Intensitäts-Gradient der horizontalen und vertikalen Helldunkelgrenzen angepasst werden.

In einer vorteilhaften Ausgestaltung besteht die Linsenanordnung aus einer PC-Streulinse und einer B270-oder PMMA-Sammellinse, die aneinander angepasst und und auf den Rest der Optik abgestimmt sind.

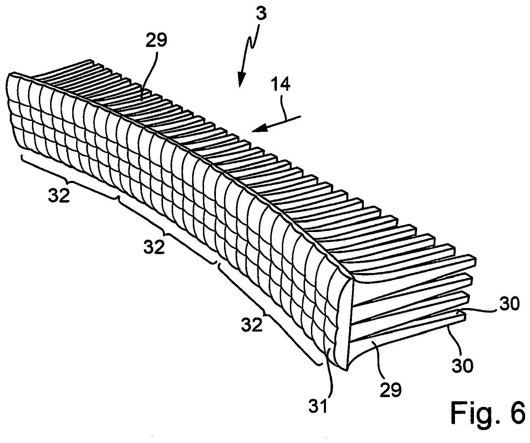

In einer alternativen Ausgestaltung weist die Sekundäroptik eine achromatisch wirkende Anordnung mit einem Verbund aus einer positiven Sammellinse und einer diffraktiven Optik auf, wobei die diffraktive Optik von ihrer Funktion her die negative Linse ersetzt. In einer Ausgestaltung ist die diffraktive Optik durch eine beugende Strukturierung der Oberfläche oder einer der Oberflächen der Sammellinse realisiert. In dieser Ausgestaltung ergibt sich die farbkorrigierende Wirkung durch eine wenigstens teilweise Kompensation einer normalen Dispersion der Linse (blau wird stärker gebrochen als rot) mit der anormalen Dispersion eines Gitters (rot wird stärker gebrochen als blau). Figur 6 zeigt eine Primäroptik 3 in einer perspektivischen Ansicht. Die Primäroptik 3 umfasst mehrere matrixartig angeordnete Lichtleiterabschnitte 29 mit totalreflektierenden Eigenschaften. Die Lichtleiterabschnitte 29 sind bevorzugt aus Silikon hergestellt. In alternativen Ausgestaltungen sind sie aus Glas, Kunststoff oder einem technisch vergleichbaren Material hergestellt. Einander gegenüberliegende Seitenflächen 30 der Lichtleiterabschnitte 29 laufen auseinander, so dass sich der Querschnitt eines Lichtleiterabschnitts 29 längs einer Richtung vergrößert, die von seiner Lichteintrittsseite her kommt und sich zu seiner als Lichtaustrittsfläche dienenden Teilgrenzfläche 31 erstreckt.

Teilgrenzflächen 31 benachbarter Lichtleiterabschnitte 29 der Primäroptik 3 gehen knickfrei oder, wie in der Fig. 6, nicht knickfrei ineinander über und werden bei der Herstellung des Scheinwerfers 1 nahe der Brennfläche (sog. Petzval-Fläche) der abbildenden Sekundäroptik 4 angeordnet. Durch die Anordnung nahe der sog. Petzval-Fläche wird die Abbildungsschärfe der außen liegenden Randlichtleiterabschnitte verbessert.

Wie aus Figur 6 ersichtlich, sind die Lichtleiterabschnitte 29 in einer oberen bzw. unteren Reihe der Anordnung im Vergleich zu den Lichtleiterabschnitten der übrigen Reihen mit größeren und anders ausgebildeten Teilgrenzflächen 31 und Wandungen ausgestaltet. Näheres zur Ausgestaltung eines Lichtleiterabschnitts 29 folgt weiter hinten. Mehrere nebeneinander und untereinander angeordnete Lichtleiterabschnitte 29 sind zu einer Matrix 32 oder mehreren Matrizen 32 zusammengefasst.

Die in der Figur 6 dargestellte Primäroptik 3 weist drei Matrizen 32 auf, wobei jede Matrix 32 bei einer Draufsicht in einem Winkel von ca. 10° versetzt angeordnet ist. Die drei Matrizen 32 sind in einer bevorzugten Ausgestaltung so geformt, dass ihre den Halbleiterlichtquellen zugewandte Seite in einer ebenen Fläche liegt. Dies erlaubt die Verwendung einer einzigen starren Platine 7 als Schaltungsträger für sämtliche Halbleiterlichtquellen.

In einer weiteren Ausgestaltung sind die Matrizen 32 untereinander gleich. In der dargestellten leicht konkaven Anordnung ihrer Teilgrenzflächen 31 ergibt sich auch eine gekrümmte Einhüllende als Fläche, in der die zugehörigen Halbleiterlichtquellen liegen. In diesem Fall werden bevorzugt flexible Leiterplatten als Schaltungsträger für die Halbleiterlichtquellen verwendet.

Die Anzahl und die Anordnung der Lichtleiterabschnitte 29 jeder Matrix 32, sowie die Anzahl der Matrizen 32 sind nahezu beliebig und kann den technischen Anforderungen entsprechend angepasst werden.

Die einzelnen Lichtleiterabschnitte 29 sind in einer Ausgestaltung derart angeordnet, dass sie zwar aneinandergrenzen, aber keine Berührungsfläche zueinander haben. Dies wird bei der Herstellung der Matrix 32 über eine matrixartige Lochmaske (nicht dargestellt), die den Abstand der einzelnen Lichtleiterabschnitte 29 zueinander festlegt und als Haltevorrichtung dient, realisiert. Eine die Totalreflexion innerhalb jedes Lichtleiterabschnitts störende Berührung der einzelnen Lichtleiterabschnitte wird dadurch verhindert.

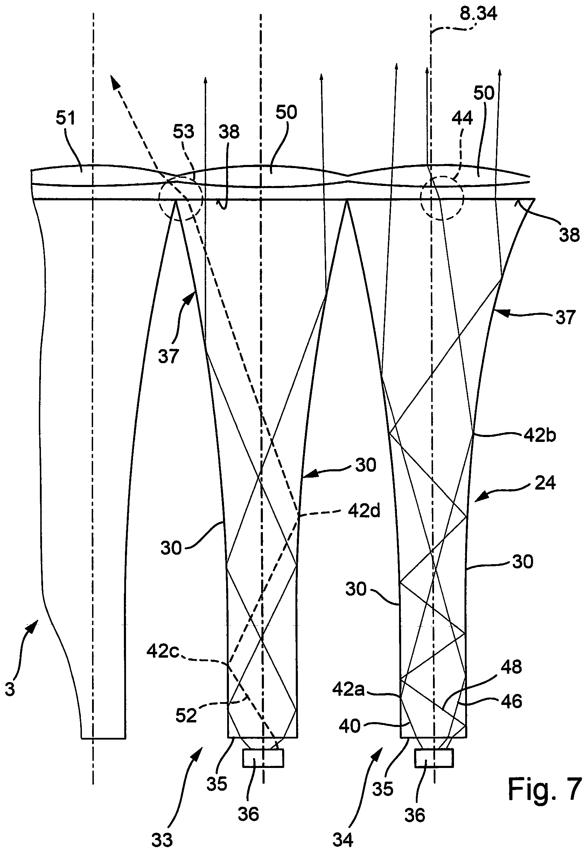

Figur 7 zeigt zwei mit gekrümmten Seitenflächen 30 ausgebildete Lichtleiterabschnitte 33, 34 mit einzelnen Strahlenverläufen. Jeder Lichtleiterabschnitt 33, 34 weist an seiner Schmalseite eine Lichteintrittsfläche 35 auf, in die Licht einer Halbleiterlichtquelle 36 eingekoppelt wird. Die Halbleiterlichtquelle 36 ist jeweils so nah wie möglich, aber berührungsfrei, an der Lichteintrittsfläche 35 angeordnet. Das bedeutet, dass die Halbleiterlichtquelle 36 in einem so geringen Abstand zur Lichteintrittsfläche 35 angeordnet ist, dass ein möglichst großer Lichtfluss von der Lichteintrittsfläche 35 eingefangen wird, aber es auch bei Erhitzung der Halbleiterlichtquelle 36 im Betrieb durch Wärmeausdehnung möglichst nicht zu einer gegenseitigen Berührung mit der Lichteintrittsfläche 35 kommt. Dadurch wird eine durch Druckeffekte sonst mögliche Beschädigung der Halbleiterlichtquellen 26 wirksam verhindert, ohne den mit zunehmendem Abstand kleiner werdenden Lichteinfangsraumwinkel der Lichteintrittsflächen 35 unnötig zu verringern.

Zur besseren Fokussierung der von der Halbleiterlichtquelle 36 ausgesandten Lichtstrahlen kann noch ein in Lichtaustrittsrichtung reflektierender Reflektor vorhanden sein, der in der Fig. 7 jedoch aus Gründen der Übersichtlichkeit nicht dargestellt ist.

Eine oder mehrere Halbleiterlichtquellen 36 können als Bestandteil eines Nachtsichtgeräts auch dazu eingerichtet sein, Infrarot- oder Ultraviolettstrahlen auszusenden, bspw. zur Erkennung von Gefahrenobjekten vor dem Fahrzeug.

An den Seitenflächen 30 der Lichtleiterabschnitte ist eine Totalreflexion der eingekoppelten Lichtstrahlen möglich. Die Stirnseite des konischen bzw. trichterförmigen Auslaufs 37 der Lichtleiterabschnitte 33, 34 ist in der dargestellten Ausgestaltung in Lichtaustrittsrichtung als eine Lichtauskoppelfläche 38 für die Lichtstrahlen ausgestaltet. Alle Lichtauskoppelflächen 38 der Lichtleiterabschnitte 33, 34 einer Matrix 32 bilden eine zusammenhängende Fläche, die nicht unbedingt eine Ebene sein muss. Die Lichtleiterabschnitte 33, 34 sind so dimensioniert, dass ihre effektive Länge wesentlich größer als die Querschnittsmaße ihrer Lichteintrittsfläche 35 und/oder ihrer Lichtauskoppelfläche 38 ist.

Aus den Halbleiterlichtquellen 36 treten üblicherweise divergente Lichtstrahlen aus. Ein erster Lichtstrahl 40 wird von der rechten Halbleiterlichtquelle 36 ausgesandt und trifft schräg auf die Lichteintrittsfläche des in Figur 7 rechts außen dargestellten Lichtleiterabschnitts 34. Beim Übergang vom optisch dünnen Medium Luft zum optisch dichteren Medium des zum Beispiel aus Silikon bestehenden Lichtleiterabschnitts 34 wird der Lichtstrahl 40 gebrochen.

An den Seitenflächen 30 des Lichtleiterabschnitts 34 wird der Lichtstrahl 40 zweimal total reflektiert (vgl. Bezugszeichen 42a und 42b). Bei jeder Reflexion 42a und 42b an den auseinanderlaufenden Seitenflächen 30 erfolgt eine Verkleinerung des Winkels zwischen dem Lichtstrahl 40 und der optischen Achse 8.34 des Lichtleiterabschnitts 34 und damit eine Verringerung der Divergenz des im Lichtleiterabschnitts propagierenden Lichtes. Eine solche Verringerung der Divergenz wird im Folgenden auch als Bündelung bezeichnet. Zwei weitere Lichtstrahlen 46 und 48 erfahren bei anderen Einkoppelwinkeln ebenfalls eine Bündelung. Man erkennt insbesondere anhand des Lichtstrahls 48, dass besonders schräg in einen Lichtleiterabschnitt 34 einfallende Lichtstrahlen vergleichsweise viele Totalreflexionen erfahren und dadurch mehr und mehr in Bezug auf die optische Achse 8.34 gebündelt werden. Die in den Lichtleiter 24 eingekoppelten Lichtstrahlen 40, 46, 48 werden im Ergebnis auch untereinander in Lichtaustrittsrichtung gebündelt.

Beim Übergang vom optisch dichten Medium des Lichtleiterabschnitts 34 zum dünnen Medium Luft wird der Lichtstrahl 40 an der Lichtauskoppelfläche 38 wieder gebrochen. Da der Lichtstrahl 40 infolge der begrenzt möglichen Bündelung leicht schräg auf die Lichtauskoppelfläche 38 trifft, wird er dort von der optischen Achse weggebrochen (vgl. Bezugszeichen 44).

Im vorgegebenen Abstand zur Lichtauskoppelfläche 38 ist jedem Lichtleiterabschnitt 33, 34 in Lichtaustrittsrichtung eine kissenförmige Hauptaustrittsoptik 50 zugeordnet. Die jeweils benachbart zur Hauptaustrittsoptik 50 eines ersten Lichtleiterabschnitts angeordnete Austrittsoptik eines benachbarten Lichtleiterabschnitts bildet in Bezug auf den ersten Lichtleiterabschnitt eine Nebenaustrittsoptik 51. Der Lichtstrahl 40 wird in der Austrittsoptik 50 des Lichtleiterabschnitts 34 in eine Hauptabstrahlrichtung gebrochen und beleuchtet daher, wie in Verbindung mit der Fig. 3 ausgeführt wurde, eine Lichteinfallsseite der Sekundäroptik. Die kissenförmige Ausgestaltung der Austrittsoptik 50 unterstützt die Umlenkung in diese Hauptabstrahlrichtung. Ein Großteil der durch einen der Lichtleiterabschnitte 33, 34 gebündelten Lichtstrahlen (z.B. Lichtstrahlen 40, 46, 48) tritt durch die dem jeweiligen Lichtleiterabschnitt 33, 34 zugeordnete Hauptaustrittsoptik hindurch und dient damit zur erwünschten Beleuchtung der Sekundäroptik.

Die linke Halbleiterlichtquelle 36 aus Figur 7 emittiert Licht unter anderem auch in die gestrichelt dargestellte Richtung 52. Der Lichtstrahl 52 wird nach zweimaliger Totalreflexion (vgl. Bezugszeichen 42c und 42d) im Lichtleiterabschnitt 33 über einen Randbereich 53 der Lichtauskoppelfläche 38 ausgekoppelt. Ein solcher Strahl 52 würde die Abbildungen benachbarter Lichtleiterabschnitte überlagern und so zu einer hellen Gitterstruktur der resultierenden Lichtverteilung führen.

Um dies zu verhindern, ist die Primäroptik 3 dazu eingerichtet, einen solchen Lichtstrahl 52 nicht auf die dem Lichtleiterabschnitt 33 zugeordnete Hauptaustrittsoptik 50, sondern auf eine Nebenaustrittsoptik 51 in Form einer einem benachbarten Lichtleiterabschnitt zugehörigen Austrittsoptik einfallen zu lassen. An dieser Nebenaustrittsoptik wird der Lichtstrahl 52 als Folge seines flachen Auftreffwinkels derart abgelenkt, dass er von der Primäroptik 3 in eine Nebenabstrahlrichtung 27, 28 abgestrahlt wird, wie sie in der Fig. 3 dargestellt ist.

Der Lichtstrahl 52 gelangt daher insbesondere nicht auf die in Fig. 3 dargestellte Sekundäroptik 4 sondern wird von einer geeigneten Tubus- oder Blendenanordnung, die um die Sekundäroptik 4 angeordnet ist und in verschiedenen Ausgestaltungen in den Fig. 1 und 3 bis 5 dargestellt ist, absorbiert.

Der Lichtstrahl 52 trägt daher nicht zu der resultierenden Lichtverteilung bei. Ohne diese Maßnahme würde der Lichtstrahl 52 den Saum um die von dem Lichtleiterabschnitt 33 erzeugte Lichtverteilung aufhellen, was die homogene Lichtverteilung stören würde. Die Lichtleiterabschnitte einer Matrix 26 sowie die zugeordnete Austrittsoptiken und oder Teilgrenzflächen sind so angeordnet und ausgebildet, dass Lichtstrahlen, die den Randbereich 53 der Lichtauskoppelfläche 38 treffen, immer auf eine benachbarte Austrittsoptik treffen und von dort von der Sekundäroptik 4 weg gelenkt werden. Ziel ist es dabei, den Anteil der wegzulenkenden Lichtstrahlen 52 so weit wie möglich zu reduzieren, um einen besonders guten Wirkungsgrad zu erreichen.

Zwischen einem Lichtleiterabschnitt 33, 34 und seiner jeweiligen Hauptaustrittsoptik ist in einer Ausgestaltung ein Luftspalt vorgesehen. In einer alternativen Ausgestaltung ist das dem Luftspalt entsprechende Volumen mit einem transparenten, vorzugsweise farblosen Material gefüllt. In einer weiteren Alternative sind die Austrittsoptiken integrale Bestandteile der Lichtleiterabschnitte 33, 34.

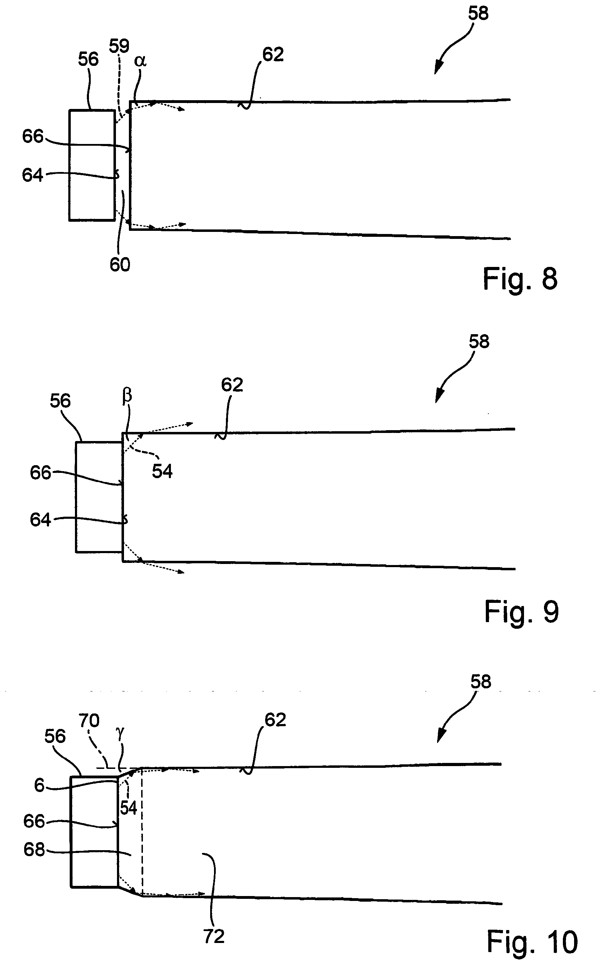

Figur 8 veranschaulicht eine berührungslos erfolgende Einkopplung von Licht 54 einer Halbleiterlichtquelle 56 in einen Lichtleiterabschnitt 58 einer Primäroptik. Das unter einem bestimmten Winkel aus der Halbleiterlichtquelle 54 austretende Licht 56 durchläuft zunächst einen Luftspalt 60 und wird dann beim Eintritt in den Lichtleiterabschnitt 58 zum Lot hin gebrochen. Anschließend trifft es unter einem Winkel α auf eine Seitenwand 62 des Lichtleiterabschnitts 58, bei dem eine Totalreflexion erfolgt.

Alternativ zu einer berührungslos erfolgenden Einkopplung kann die Einkopplung auch über sich berührende Flächen 64 der Halbleiterlichtquelle 56 und 66 eines Lichtleiterabschnitts 58 der Primäroptik erfolgen. Dies ist in der Fig. 9 dargestellt.

Eine solche Einkopplung hat den Vorteil, dass keine Toleranzen in Bezug auf eine Breite eines Luftspaltes 60 zwischen der Halbleiterlichtquelle 56 und der Primäroptik 58 eingehalten werden müssen. Eine solche Einkopplung erfordert Halbleiterlichtquellen 56, deren Halbleitermaterial nicht mit Bonddrähten kontaktiert wird, die die Ebene durchstoßen, in der die Lichtaustrittsfläche 64 liegt. Solche Halbleiterlichtquellen 56 sind auf dem Markt erhältlich.

Der Vorteil einer solchen, unter Berührung erfolgenden Einkopplung liegt darin, dass die Position der jeweils in einen Lichtleiterabschnitt 58 einkoppelnden Halbleiterlichtquelle 56 in Bezug auf diesen Lichtleiterabschnitt 58 besser fixiert ist. Dies gilt natürlich auch umgekehrt für die Position des Lichtleiterabschnitts 58 in Bezug auf die Position der Halbleiterlichtquelle 56. Dadurch werden Relativbewegungen zwischen der Halbleiterlichtquelle 56 und dem Lichtleiterabschnitt 58, wie sie durch Temperaturausdehnungen und mechanische Erschütterungen ausgelöst werden könnten, minimiert. Als Folge ergibt sich eine vorteilhaft verringerte Empfindlichkeit der lichttechnischen Eigenschaften des Scheinwerfers in Bezug auf solche Einflüsse.

Die Materialien der einander berührenden Grenzflächen 64, 66 werden bevorzugt so ausgewählt, dass sich ein Brechindex-Matching ergibt. Dann ergibt sich keine Lichtbrechung an der Grenzfläche. Als Nachteil könnte es dann zu der in Figur 9 dargestellten Situation kommen, bei der das in den Lichtleiterabschnitt eingekoppelte Licht zunächst 54 die Richtung beibehält, mit der es aus der Halbleiterlichtquelle 56 ausgekoppelt worden ist. Beim Gegenstand der Figuren 8 und 9 entspricht diese Richtung genau der Richtung, in die das Licht im Luftspalt 60 der Anordnung nach der Figur 8 propagiert. Im Ergebnis trifft das Licht 54 beim Gegenstand der Figur 9 dann unter einem Winkel β auf die Seitenwand 62 des Lichtleiterabschnitts 58, bei dem es nicht mehr komplett total reflektiert wird, sondern zumindest teilweise über die Seitenwand 62 aus dem Lichtleiterabschnitt 58 ausgekoppelt wird. Dieser Effekt ist nachteilig, weil das über die Seitenwand 62 ausgekoppelte Licht nicht mehr als Beitrag für die gewünschte Lichtverteilung zur Verfügung steht.

Dieser nachteilige Effekt wird beim Gegenstand der Figur 10 vermieden. Figur 10 zeigt eine unter Berührung erfolgende Einkopplung von Licht 54 aus einer Halbleiterlichtquelle 56 in einen Lichtleiterabschnitt 58. Die Ausgestaltung des Lichtleiterabschnitts 58 der Figur 10 zeichnet sich dadurch aus, dass seine Seitenwand in einem ersten, näher an seiner Lichteintrittsfläche 66 liegenden Bereich 68 einen größeren Winkel γ mit einer optischen Achse 70 einschließt als in einem zweiten, weiter von seiner Lichteintrittsfläche 66 entfernt liegenden Bereich 72. Durch passende Gestaltung des ersten Bereichs 68 wird der Winkel δ, unter dem eingekoppeltes 54 Licht auf die Seitenwand 62 auftrifft, im ersten Bereich 68 so reduziert, dass es total reflektiert und damit nicht über die Seitenwand 62 ausgekoppelt wird. Es steht daher nach wie vor für die Erzeugung einer gewünschten Lichtverteilung zur Verfügung.

## Patentansprüche

1. Kraftfahrzeugscheinwerfer (1) mit einem Lichtmodul (2), das eine matrixartige Anordnung von Halbleiterlichtquellen (13, 14, 15, 16), eine Primäroptik (3) und eine Sekundäroptik (4) aufweist, wobei die Primäroptik (3) Halbleiterlichtquellen-individuelle Lichtleiterabschnitte (17, 18, 19, 20) und eine aus matrixartig angeordneten Teilgrenzflächen (21, 22, 23, 24) zusammengesetzte Grenzfläche (25) aufweist, wobei ein jeweils erster Lichtleiterabschnitt (18) und eine jeweils erste Teilgrenzfläche (22) dazu eingerichtet sind, von einer jeweils ersten Halbleiterlichtquelle (14) aufgenommenes Licht in einer Hauptabstrahlrichtung (26) auf die Sekundäroptik (4) zu richten, und wobei die Sekundäroptik (4) dazu eingerichtet ist, eine sich auf der Grenzfläche (25) einstellende Lichtverteilung in ein vor dem Scheinwerfer (1) liegendes Vorfeld abzubilden, **dadurch gekennzeichnet, dass** der jeweils erste Lichtleiterabschnitt (18) und/oder die jeweils erste Teilgrenzfläche (22) dazu eingerichtet ist, Licht einer jeweils zweiten Halbleiterlichtquelle (13, 15), das direkt oder über einen jeweils zweiten Lichtleiterabschnitt (17, 19) auf die jeweils erste Teilgrenzfläche (22) fällt, in einer Nebenabstrahlrichtung (27, 28) an der Sekundäroptik (4) vorbei zu richten, wobei der Kraftfahrzeugscheinwerfer (1) wenigstens eine reflektierende und/oder absorbierende Fläche (9) aufweist, die so angeordnet ist, dass das in die Nebenabstrahlrichtungen (27, 28) gerichtete Licht daran gehindert wird, die sich im Vorfeld einstellende Lichtverteilung zu beeinflussen, und wobei die Sekundäroptik (4) eine achromatisch wirkende Anordnung aufweist, die mindestens zwei Linsen (11, 12) mit unterschiedlicher Brechzahl aufweist oder die einen Verbund aus einer Sammellinse und einer diffraktiven Optik aufweist.

2. Kraftfahrzeugscheinwerfer (1) nach Anspruch 1, **dadurch gekennzeichnet, dass** die Lichtleiterabschnitte (17, 18, 19, 20) aus Silikon, Glas oder Kunststoff hergestellt sind.

3. Kraftfahrzeugscheinwerfer (1) nach einem der vorhergehenden Ansprüche, **dadurch gekennzeichnet, dass** die Lichtleiterabschnitte (17, 18, 19, 20) der Primäroptik (3) einen sich in Lichtausbreitungsrichtung aufweitenden Querschnitt aufweisen, der durch in Lichtausbreitungsrichtung verlaufende Seitenflächen erzielt wird, die zumindest abschnittsweise konisch verlaufen und/oder konvex und/oder konkav gekrümmt sind und dadurch eine trichterförmige Struktur definieren.

4. Kraftfahrzeugscheinwerfer (1) nach einem der vorhergehenden Ansprüche, **dadurch gekennzeichnet, dass** ein Tubus (10) als Halterung der abbildenden Sekundäroptik (4) verwendet wird.

5. Kraftfahrzeugscheinwerfer (1) nach einem der vorhergehenden Ansprüche, **dadurch gekennzeichnet, dass** die wenigstens eine reflektierende und/oder absorbierende Fläche (9) und/oder der Tubus (10) so dimensioniert sind, dass sie das von Hauptabstrahlrichtungen (26) gebildete und die gesamte Lichteintrittsfläche der Sekundäroptik (4) beleuchtende Lichtbündel nicht beschränken.

6. Kraftfahrzeugscheinwerfer (1) nach einem der vorhergehenden Ansprüche, **dadurch gekennzeichnet, dass** die achromatisch wirkende Anordnung aus zwei Linsen (11, 12) eine Kombination aus einer Glaslinse und einer Kunststofflinse oder aus einer ersten Kunststofflinse und einer zweiten Kunststofflinse aufweist.

7. Kraftfahrzeugscheinwerfer (1) nach einem der vorhergehenden Ansprüche, **dadurch gekennzeichnet, dass** eine achromatisch wirkende Anordnung aus zwei Linsen (11, 12) zusätzlich streuende Oberflächenstrukturen auf der Lichtaustrittsfläche der Linsenanordnung besitzt.

8. Kraftfahrzeugscheinwerfer (1) nach einem der vorhergehenden Ansprüche, **dadurch gekennzeichnet, dass** die achromatisch wirkende Anordnung aus zwei Linsen (11, 12) aus einer PC-Streulinse (12)und einer B270- oder PMMA-Sammellinse (11) besteht.

9. Kraftfahrzeugscheinwerfer (1) nach einem der vorhergehenden Ansprüche, **dadurch gekennzeichnet, dass** Teilgrenzflächen (31) benachbarter Lichtleiterabschnitte (29) nahe der Brennfläche der abbildenden Sekundäroptik (4) angeordnet sind.

10. Kraftfahrzeugscheinwerfer (1) nach einem der vorhergehenden Ansprüche, **dadurch gekennzeichnet, dass** Lichtleiterabschnitte (29) derart angeordnet sind, dass sie zwar aneinandergrenzen, aber keine Berührungsfläche zueinander haben.

11. Kraftfahrzeugscheinwerfer (1) nach einem der vorhergehenden Ansprüche, **dadurch gekennzeichnet, dass** die Halbleiterlichtquellen (36) in einem so geringen Abstand zu Lichteintrittsflächen (35) von Lichtleiterabschnitten (33, 34) angeordnet sind, dass ein möglichst großer Lichtfluss von der Lichteintrittsfläche (35) eingefangen wird, aber es auch bei Erhitzung der Halbleiterlichtquelle (36) im Betrieb bei einer durch Wärmeausdehnung erfolgenden Annäherung nicht zu einer Berührung der Halbleiterlichtquelle (36) durch die Lichteintrittsfläche (35) kommt.

12. Kraftfahrzeugscheinwerfer (1) nach einem der Ansprüche 1 bis 10, **dadurch gekennzeichnet, dass** die Halbleiterlichtquellen (56) in Berührung mit Lichteintrittsflächen (66) von Lichtleiterabschnitten (58) angeordnet sind.

13. Kraftfahrzeugscheinwerfer (1) nach Anspruch 12, **dadurch gekennzeichnet, dass** eine Seitenwand (62) des Lichtleiterabschnitts (58) in einem ersten, näher an seiner Lichteintrittsfläche (66) liegenden Bereich (68) einen größeren Winkel (γ) mit einer Richtung (70) einer optischen Achse des Lichtleiterabschnitts (58) einschließt als in einem zweiten, weiter von seiner Lichteintrittsfläche (66) entfernt liegenden Bereich (72).

## Claims

1. A motor vehicle headlight (1) having a light module (2) that has a matrixlike arrangement of semiconductor light sources (13, 14, 15, 16), a primary lens (3), and a secondary lens (4), wherein the primary lens (3) has individual optical wave guide portions (17, 18, 19, 20) for each semiconductor light source and a boundary face (25) composed of partial boundary faces (21, 22, 23, 24) that are arranged in matrixlike fashion, and a respective first optical wave guide portion (18) and a respective first partial boundary face (22) are arranged for aiming light received from a respective first semiconductor light source (14) in a primary radiating direction (26) at the secondary lens (4), and the secondary lens (4) is arranged for projecting a light distribution, established on the boundary face (25), into a forefield located ahead of the headlight (1), **characterized in that** the respective first optical wave guide portion (18) and/or the respective first partial boundary face (22) is arranged for aiming light from a respective second semiconductor light source (13, 15), which falls onto the respective first partial boundary face (22) directly or via a respective second optical wave guide portion (17, 19), in a secondary beam direction (27, 28) at the secondary lens (4), and the motor vehicle headlight (1) has at least one reflective and/or absorbent surface (9), which is located such that the light aimed in the secondary beam directions (27, 28) is prevented from affecting the light distribution established in the forefield, and the secondary lens (4) has an achromatically acting arrangement that has at least two lenses (11, 12) with a different refractive index or which has a combination of a converging lens and a diffractive lens.

2. The motor vehicle headlight (1) of claim 1, **characterized in that** the optical wave guide portions (17, 18, 19, 20) are made from silicone, glass or plastic.

3. The motor vehicle headlight (1) of one of the foregoing claims, **characterized in that** the optical wave guide portions (17, 18, 19, 20) of the primary lens (3) have a cross section that widens in the light propagation direction, which cross section is attained by means of side faces extending in the light propagation direction that extend at least intermittently conically and/or are convexly and/or concavely curved and thereby define a funnel-shaped structure.

4. The motor vehicle headlight (1) of one of the foregoing claims, **characterized in that** a tube (10) is used as a mounting of the projecting secondary lens (4).

5. The motor vehicle headlight (1) of one of the foregoing claims, **characterized in that** the at least one reflective and/or absorbent surface (9) and/or the tube (10) is dimensioned such that it does not restrict the beam formed by the primary beam directions (26) and illuminating the entire light-entry surface of the secondary lens (4).

6. The motor vehicle headlight (1) of one of the foregoing claims, **characterized in that** the achromatically acting arrangement of two lenses (11, 12) has a combination of a glass lens and a plastic lens, or of a first plastic lens and a second plastic lens.

7. The motor vehicle headlight (1) of one of the foregoing claims, **characterized in that** an achromatic assembly comprising two lenses (11, 12) additionally has scattering surface structures on the light exit surface of the lens assembly.

8. The motor vehicle headlight (1) of one of the foregoing claims, **characterized in that** the achromatic assembly comprises two lenses (11, 12) comprising a PC scattering lens (12) and a B270 or PMMA converging lens (11).

9. The motor vehicle headlight (1) of one of the foregoing claims, **characterized in that** partial boundary faces (31) of adjacent optical wave guide portions (29) are located near the focal surface of the imaging secondary lens (4).

10. The motor vehicle headlight (1) of one of the foregoing claims, **characterized in that** optical wave guide portions (29) are located in such a way that while they do border each other, they have no contact face with one another.

11. The motor vehicle headlight (1) of one of the foregoing claims, **characterized in that** the semiconductor light sources (36) are located at such a slight spacing from light input surfaces (35) of optical wave guide portions (33, 34) that the greatest possible light flux is caught from the light input surface (35), but even upon heating of the semiconductor light source (36) in operation, upon coming closer as a result of heat expansion, contact of the semiconductor light source (36) by the light input surface (35) does not come about.

12. The motor vehicle headlight (1) of one of claims 1 through 10, **characterized in that** the semiconductor light sources (56) are located in contact with light input surfaces (66) of optical wave guide portions (58).

13. The motor vehicle headlight (1) of claim 12, **characterized in that** a side wall (62) of the optical wave guide portion (58), in a first region (68) located closer to its light input surface (66), forms a larger angle (γ) with a direction (70) of an optical axis of the optical wave guide portion (58) than in a second region (72), located farther away from its light input surface (66).

## Revendications

1. Phare de véhicule automobile (1) doté d'un module de lumière (2) qui comprend un agencement matriciel de sources de lumière semi-conductrices (13, 14, 15, 16), une optique primaire (3) et une optique secondaire (4), l'optique primaire (3) comprenant des tronçons de guide de lumière (17, 18, 19, 20) individuels pour chaque source de lumière semi-conductrice et une interface optique (25) constituée par des interfaces optiques partielles (21, 22, 23, 24) disposées sous la forme d'une matrice, un premier tronçon respectif de guide de lumière (18) et une première interface optique partielle (22) respective étant agencés de façon à diriger de la lumière provenant d'une première source de lumière semi-conductrice (14) respective dans une direction d'émission principale (26) sur l'optique secondaire (4), et l'optique secondaire (4) étant agencée de façon à reproduire une répartition de lumière se présentant sur l'interface optique (25), sur un champ s'étendant devant le phare (1), **caractérisé en ce que** le premier tronçon respectif de guide de lumière (18) et/ou une première interface optique partielle (22) respective est agencée de façon à diriger de la lumière provenant d'une deuxième source de lumière semi-conductrice (13, 15) respective, qui tombe directement ou via un deuxième tronçon respectif de guide de lumière (17, 19) sur la première interface optique partielle (22) respective, dans une direction d'émission secondaire (27, 28) de façon à passer à côté de l'optique secondaire (4), le phare de véhicule automobile (1) comprenant au moins une surface (9) réfléchissante et/ou absorbante qui est disposée de façon que la lumière dirigée dans les directions d'émission secondaires (27, 28) soit empêchée d'influencer la répartition de lumière se présentant audit champ, et l'optique secondaire (4) présentant un agencement à effet achromatique qui comprend au moins deux lentilles (11, 12) à indices de réfraction différents et qui comprend un ensemble formé d'une lentille convergente et d'une optique diffractive.

2. Phare de véhicule automobile (1) selon la revendication 1, **caractérisé en ce que** les tronçons de guide de lumière (17, 18, 19, 20) sont réalisés en silicone, en verre ou en matière synthétique.

3. Phare de véhicule automobile (1) selon l'une des revendications précédentes, **caractérisé en ce que** les tronçons de guide de lumière (17, 18, 19, 20) de l'optique primaire (3) présentent une section transversale croissante dans la direction de la propagation de la lumière, qui est obtenue par des surfaces latérales s'étendant dans la direction de la propagation de la lumière, qui s'étendent, au moins par section, de manière conique et/ou qui sont courbées de façon convexe et/ou de façon concave et qui définissent par cela une structure en forme d'entonnoir.

4. Phare de véhicule automobile (1) selon l'une des revendications précédentes, **caractérisé en ce qu'**un tube (10) est utilisé comme support de l'optique secondaire (4) formant une image.

5. Phare de véhicule automobile (1) selon l'une des revendications précédentes, **caractérisé en ce que** ladite au moins une surface (9) réfléchissante et/ou absorbante et/ou le tube (10) ont des dimensions telles qu'elles ne restreignent pas le faisceau de lumière formé par des directions d'émission principales (26) et illuminant la surface d'entrée de lumière entière de l'optique secondaire (4).

6. Phare de véhicule automobile (1) selon l'une des revendications précédentes, **caractérisé en ce que** la disposition à effet achromatique de deux lentilles (11, 12) comprend une combinaison d'une lentille en verre et d'une lentille en matière synthétique ou d'une première lentille en matière synthétique et d'une seconde lentille en matière synthétique.

7. Phare de véhicule automobile (1) selon l'une des revendications précédentes, **caractérisé en ce qu'**une disposition à effet achromatique de deux lentilles (11, 12) comprend en outre des structures de surface diffusantes sur la surface de sortie de lumière de la disposition de lentilles.

8. Phare de véhicule automobile (1) selon l'une des revendications précédentes, **caractérisé en ce que** la disposition à effet achromatique de deux lentilles (11, 12) est constituée d'une lentille divergente PC (12) et d'une lentille convergente B270 ou PMMA (11).

9. Phare de véhicule automobile (1) selon l'une des revendications précédentes, **caractérisé en ce que** les interfaces optiques (31) de tronçons de guide de lumière (29) avoisinants sont disposées proche de la surface de focalisation de l'optique secondaire formant une image.

10. Phare de véhicule automobile (1) selon l'une des revendications précédentes, **caractérisé en ce que** les tronçons de guide de lumière (29) sont disposés de façon qu'ils soient adjacents les uns aux autres mais qu'ils n'aient pas de surface de contact entre eux.

11. Phare de véhicule automobile (1) selon l'une des revendications précédentes, **caractérisé en ce que** les sources de lumière semi-conductrices (36) sont disposées à des distances si faibles de surfaces d'entrée de lumière (35) de tronçons de guide de lumière (33, 34) qu'un flux de lumière le plus grand possible soit capté par la surface d'entrée de lumière (35) mais que, même lorsqu'il y a rapprochement par expansion thermique lors d'un échauffement de la source de lumière semi-conductrice (36) en fonctionnement, il n'y ait pas de contact de la source de lumière semi-conductrice (36) par la surface d'entrée de lumière (35).

12. Phare de véhicule automobile (1) selon l'une des revendications 1 à 10, **caractérisé en ce que** les sources de lumière semi-conductrices (56) sont disposées en contact avec des surfaces d'entrée de lumière (66) de tronçons de guide de lumière (58).

13. Phare de véhicule automobile (1) selon la revendication 12, **caractérisé en ce qu'**une paroi latérale (62) du tronçon de guide de lumière (58) enferme avec une direction (70) d'un axe optique du tronçon de guide de lumière (58) un angle (γ) plus grand dans une première zone (68) située plus proche de sa surface d'entrée de lumière (66) que dans une deuxième zone (72) située plus loin de sa surface d'entrée de lumière (66).
